# EUROPEAN PATENT APPLICATION

(11) **EP 4 368 387 A1**
(43) Date of publication of application: **15.05.2024**
(21) Application number: 22207315.7
(22) Date of filing: 14.11.2022
(51) Int. Cl.: B32B 23/08, B32B 27/08, B32B 27/18, B32B 27/30, B32B 27/36, B32B 29/00, C08J 5/18

(54) **POLYMER MULTILAYER**

(71) Applicant: B&T Entwicklungs- und Vermarktungsgesellschaft mbH, 22297 Hamburg (DE)
(72) Inventor: MORENO LÓPEZ, Elena, 46136 Museros Valencia (ES); GARCÍA MONTEAGUDO, Miguel, 46136 Museros Valencia (ES); AGREDANO, Isabel, 46136 Museros Valencia (ES); BALKAU, Werner, 8762 Glarus-Süd/Schwändi (CH)
(74) Representative: Frei Patent Attorneys

(57) **Abstract**

The multilayer (5) comprises at least one first layer (1) comprising water-soluble polymer, wherein the first layer (1) has an oxygen transmission barrier. The multilayer (5) further comprises at least one second layer (2), wherein second layer (2) has a water vapor and/or humidity barrier. The second layer (2) comprises a wax (20). The wax (20) can be in particular a natural wax, in particular food-safe wax, in particular bio-degradable wax, in particular bee wax. The wax (20) enables to minimize the risk of migration of odours from and/or to the packaged goods.

## Description

The invention relates to the field of polymer multilayer as described in the preamble of the independent claims.

Commercially established packaging materials for high-barrier food-applications pose increasing challenges to recycling systems and end-of-life scenarios as sources of microplastics. Due to the high barrier requirements for packaging certain types of food materials, conventionally used solutions are mostly multilayer systems made up of non-biodegradable polymers and in addition often metallized surfaces. These multilayer systems cannot be recycled and thus pose a high threat of natural ecosystems in increasing volume.

Alternative packaging is known from European patent application EP 22171579.0 or EP 22 171 641.8 showing multilayer structures containing PVOH.

It is therefore an object of the invention to create an alternative multilayer containing a polymer composition and the usage of the multilayer in packaging, in particular food packaging.

These objects are achieved by a multilayer and the usage of the multilayer as well as a packaging and/or a layered structure comprising the multilayer according to the independent claims.

The multilayer comprises at least one first layer comprising water-soluble polymer, wherein the first layer has an oxygen transmission barrier. The multilayer further comprises at least one second layer, wherein the second layer has a water vapor and/or humidity barrier. The second layer comprises a wax. The wax can be in particular a natural wax, in particular food-safe wax, in particular bio-degradable wax, in particular bees wax. The wax enables to minimize the risk of migration of odours from and/or to the packaged goods.

The wax-based second layer may also be called film. In embodiments, the wax-based second layer can be coated evenly onto the first layer. The first layer might be a hydrophilic polymer-film. The second layer might be applied without islanding or defects in the film, thus providing excellent water vapor and/or humidity barrier.

In embodiments, the multilayer has a water vapor and/or humidity barrier of a maximum of 15 g/m2 per day at 25°C and a relative humidity of 80%, in particular a maximum of 10 g/m² per day at 25°C and a relative humidity of 80%, in particular 3 g/m2 per day at 25°C and a relative humidity of 80%, in particular 2 g/m2 per day at 25°C and a relative humidity of 80%. The excellent water vapor and/or humidity barrier are in particular provided by the wax included in the second layer. This makes the multilayer suitable for packaging barrier-sensitive goods, such as coffee.

In an embodiment, the first layer comprises a crosslinked composition comprising poly vinyl alcohol (PVOH) and polycaprolactone (PCL). The crosslinked composition improves the oxygen transmission barrier-performance, whilst keeping chemical and mechanical stability constant as compared to a non-crosslinked composition.

In an embodiment, the first layer comprises at least two sublayers, for example a first sublayer and a second sublayer. Both sublayers can comprise a PVOH based polymer composition. The first sublayer can comprise poly vinyl alcohol with adhesive properties. The first sublayer can be based on low-Tg & degree of hydrolysis (DH) PVOH. The second and/or first sublayer can be water-soluble. The second sublayer can comprise the above-described polymer composition as a crosslinked mixture comprising poly vinyl alcohol (PVOH) and polycaprolactone (PCL). In particular the second sublayer can provide the oxygen transmission barrier (also called gas barrier) properties to the multilayer.

The multilayer, in particular the first layer can have an oxygen transmission rate of a maximum of 3 cm³/m² per day at room temperature (RT, room temperature = 23°C) and a relative humidity of 50% (relative humidity = r. h.), in particular the oxygen transmission rate can be maximal 1 cm³/m² per day at room temperature and a relative humidity of 50%, in particular maximal 0,2 cm³/m² per day at room temperature (23°C) and a relative humidity of 50%; in particular maximal 0,05 cm³/m² per day at room temperature (23°C) and a relative humidity of 50%.

The oxygen transmission rate (OTR) is the steady state rate at which oxygen gas permeates through a film at specified conditions of temperature and relative humidity. Values are expressed in cc/m²/24 hr in metric (or SI) units, with cc being cubic centimetre being cm³, m² being square metre, 24 hr being 24 hours being one day. The OTR in this text is determined according to ISO 15105-2 (as of April 2022).

In embodiments, the first layer can be applied by co-extrusion, in particular by co-extrusion of the first sublayer and second sublayer.

In embodiments, the second layer comprises an emulsifier. The emulsifier can be natural and/or food-safe. The emulsifier can be at least one of mono- and di-glycerides. The emulsifier enables the suspension of fat and water. This makes it possible that the second layer can be applied as a rather homogenous layer on top of/adjacent to the first hydrophilic layer.

In embodiments, the layers of the multilayer are separable from each other. This allows for an individual recycling of the layers of the multilayer. In embodiments, the layers of the multilayer can be separated from each other under the conditions of the recycling process. In particular the layers are separable at a maximum temperature of 40 °C, in particular of 38°C to the most, in particular of 35°C to the most, in particular of 30°C to the most, in an aqueous environment.

In embodiments, the multilayer is non-toxic. This enables the usage of the multilayer in connection with foods. In particular the multilayer is non-toxic to human, in particular the multilayer is recognized as safe in food industry.

In embodiments, the multilayer is a food contact material. This means that the multilayer is allowed to have contact with food, e.g., in food packaging. The contact of the multilayer with food does not have any disadvantages for the food and/or the consumer.

In an embodiment, the multilayer and/or at least the water-soluble polymer is at least one of bio-degradable and compostable, in particular home compostable. While water-soluble polymers may be bio-degradable, this is not necessarily the case for all water-soluble polymers. The water-soluble polymer of the multilayer may be bio-degradable in addition to being water-soluble.

In the present text, "bio-degradable" may mean biologically degradable according to the European standard EN 13432 (as of the end of 2021). In addition, or as an alternative, it may mean biologically degradable according to the European standard EN 14995 (as of the end of 2021). Thus "bio-degradable" especially refers to "biologically degradable" according to EN 13432 and/or according to EN 14995.

In an embodiment, the first layer and/or the second layer can be bio-degradable in at least one of soil, water, waste water.

As far as in the present text water-soluble polymers are mentioned, such water-soluble polymer may optionally be (bio-)degradable in sewage treatment plants (aerobic biodegradability) in accordance with EN ISO 9888 (as of the end of 2021); determined in accordance with the so-called Zahn-Wellens test, in particular at 20°C.

Due to this the multilayer provides sufficient barrier properties for example for sensitive food products, and which simultaneously is compatible with existing recycling streams. In regions without such recycling streams or where landfill is common, the multilayer is neutral to the environment and decomposed in short time into carbon dioxide (CO2) and water (H2O) as well as biomass and maybe mineral salts.

Multilayer made of bio-degradable plastics according to the prior art sometimes show low barrier performance, in particular against oxygen and water vapor, as well as low head deforming stabilities.

The multilayer can be compostable, in particular home compostable. At least one of the first layer and the second layer can be compostable, in particular home compostable.

As mentioned above: Bio-degradation in the context of this text means the breakdown of the polymers of multilayer by microorganisms. Bio-degradability means that a material must have degraded to more than 90 percent to water, carbon dioxide (CO2) and biomass and maybe mineral salts after a specified time under defined specific temperature, oxygen and humidity conditions in the presence of microorganisms or fungi.

The term compostable refers to a bio-degradation under specific conditions.

In order for the multilayer, in particular the first layer and/or the second layer, to be compostable, at least the following conditions can be fulfilled:
- at least 90% of the organic material must be verifiably bio-degraded in CO2 within 6 months;
- after 3 months of composting and subsequent screening through a 2 mm mesh sieve, no more than 10% residue of the original mass may remain;
- there must be no negative effects on the composting process in general;
- no negative effect of the resulting composts on plant growth (agronomic test) and/or ecotoxicity test;
- the maximum concentration of heavy metals (Cu, Zn, Ni, Cd, Pb, Hg, Cr, Mo, Se, As) and florins must not be exceeded.

During composting the multilayer, in particular at least one of the first layer and the second layer, can be decomposed. The multilayer, in particular at least one of the first layer and the second layer can be composted and/or decomposed in a short time to carbon dioxide (CO2) and water (H2O) and biomass.

The multilayer, in particular at least one of the first layer and the second layer can be industrial and/or home compostable. The home compostability may not negatively influence the industrial composting process.

In the present text, "compostable" or "home compostable" means compostable or home compostable according to the European standard EN 13432 (as of the end of 2021) for packaging and/or according to the European standard EN 14995 (as of the end of 2021) for plastics/synthetic materials. Compostable materials are always biodegradable, but not necessarily vice versa, meaning not all bio-degradable materials are compostable.

In order for the multilayer, in particular the first layer and/or the second layer, to be home compostable, at least the following conditions must be fulfilled:
- at least 90% of the material must have decomposed into water, carbon dioxide and biomass in a compost heap (at approx. 30°C) within 6 months;
- neither organic pollutants nor heavy metals may enter the soil;
- the substances must not have any negative impact on the compost quality;
- the products can be disposed of in the garden compost and in the organic waste bin.

In embodiments, the multilayer comprises a third layer. The third layer can be applied on top of/arranged adjacent to the second layer. This further eliminates the risk of migration of odours from wax of the second layer to the packaged goods.

In an embodiment, the second layer, in particular the wax, and the third layer build an emulsion. The emulsion of the second layer and third layer results in a merger and/or fusion of the layers in one unique layer. In other words: The second layer, in particular the wax, and the third layer are merged into one unique layer. This makes it possible to simplify the assembly of the multilayer. The embodiment, may also allow for a sealing of the unique layer directly to the first layer.

In embodiments, the third layer is similar to the first layer. This means that the third layer can have any of the properties as described for the first layer, but the properties of the first layer and the third layer do not have to be identical. For example, the third layer can comprise a water-soluble polymer, wherein the polymer can be hydrophilic. The third layer can be coated onto the (wax-barrier) second layer, also called second layer.

In an embodiment, the third layer comprises a crosslinked composition comprising poly vinyl alcohol (PVOH) and polycaprolactone (PCL). The crosslinked composition improves the oxygen transmission barrier-performance. In an embodiment, the third layer can enable an aroma barrier for the second layer, in particular for the wax. The third layer can also function as sealing promoter.

In an embodiment, the third layer comprises at least two sublayers, for example a first sublayer and a second sublayer, similar as described above for the first layer. Both sublayers can comprise a PVOH based polymer composition.

The third hydrophilic layer can be compatible to the hydrophobic second layer in the same manner as the first layer, due to incorporation of emulsifier in the second layer as described above.

The invention also relates to a layered structure comprising a paper base layer and a multilayer as described above.

The multilayer can be a coating. The multilayer can be coated on/applied to the surface of the paper base layer. In other words: the layered structure is a system with at least two parts, namely the paper base as a first part and the multilayer as a second part. The first and second part can have essentially the same areal size. The layered structure can be regarded as laminate of the parts and builds a layering, which might also be called a laminate.

The paper base layer can be paper, fibre substrate or paperboard. Paper may especially be a non-woven material, pulp-based material. A pulp-based material is a material made from pulp, i.e., from fibers suspended in a liquid (especially water), which is removed at least partially for the production. The fibers may include vegetable fibers (especially fibers of cellulose (wood-based or from fiber crops)), especially at least 50% or at least 80% vegetable fibers or 100% vegetable fibers. In addition or as an alternative, the fibers may include mineral fibers or other natural fibers, or man-made fibers, for example a calcium carbonate basis.

In embodiments, the crosslinked composition of the first layer might provide excellent lamination properties and sealability to paper and/or to itself.

In embodiments, at least one of the multilayer and the layered structure is at least one of bio-degradable and compostable, in particular home compostable. This allows for a good recyclability of the multilayer and/or the layered structure.

In an embodiment, the first layer is arranged on one flat side of the paper base layer. The paper base layer comprises two flat sides, like a regular piece of paper. In embodiments, the surface of at least one flat side of the paper base layer is arranged adjacent to the first layer and/or the third layer. In embodiments, one flat side of the paper base layer is free of a first layer. In embodiments, the surface of both flat sides of the paper base layer are arranged adjacent to a first layer of the multilayer.

In embodiments, the first sublayer can be arranged facing the paper base layer and the second sublayer faces away from the flat side of the paper base layer. In embodiments, the second sublayer can be arranged facing the paper base layer and the first sublayer faces away from the flat side of the paper base layer.

In an embodiment, the layered structure provides an adhesion between the paper base layer and the multilayer, in particular the first layer and/or third layer, with sufficient peel strength.

Another aspect of the invention is a method for producing a layered structure, in particular as described above. The method comprising the steps of:
- providing a paper base layer;
- applying a multilayer on the paper base layer.

In an embodiment, the multilayer is applied to the paper base layer as a foil like element. In embodiments, the first layer and/or third layer is applied to the paper base layer as a foil like element. Accordingly, the multilayer as a whole or the first layer and/or third layer can be applied on the paper base layer at low temperature. The multilayer as a whole or the first layer and/or third layer can be in a solid state when applied to the paper base layer. This differs from an impregnation of the paper base layer with the components of the multilayer as a whole or the first layer and/or third layer at least by the application temperature. This enables to work at lower temperatures and can reduce the risk of deterioration of the layered structure.

Another aspect of the invention is a method for producing a multilayer as described above. The first layer is hydrophilic, and the second layer, comprising a wax, is coated onto the hydrophilic surface of the first layer. The coating can be realised by precipitating the wax from a heated, alcoholic solution loaded with emulsifier. The alcoholic solvent can comprise isopropyl alcohol.

In embodiments, the wax can be emulsified in solution comprising water and an emulsifier.

In embodiments, the wax can be emulsified in a solution comprising the water-soluble polymer, in particular of the third layer. This may simplify the production of the multilayer by reducing the number of layers.

Yet another aspect of the invention is a use of at least one of a multilayer and a layered structure as described above for packing, in particular for food packing, in particular for packing coffee.

One aspect of the invention is a packaging comprising a multilayer and/or the layered structure as described above.

In embodiments, the packaging is suited for packaging food products, in particular coffee. The packaging might be a flexible, pliant packaging material.

In an embodiment, the paper base layer of the layered structure can be directed to/arranged on the outside of the packaging. In this case the customer can have the haptic experience of a paper packaging with the improved properties being inherent to the layered structure as features of the multilayer being arranged inside the packaging.

In embodiments, the packaging, layered structure and/or multilayer meets all requirements to package highly barrier-sensitive goods, such as coffee, while retaining full recyclability of the paper base layer (also called carrier material). Due to the water-solubility and excellent biodegradability of the components employed, risks of pollution and micro-plastics are eliminated completely, thus providing a unique solution for sustainable food-packaging, without limitations in performance and application-profiles.

In an embodiment, the third layer enables a sealing function to the multilayer, the packaging and/or the layered structure.

The unique packaging, layered structure and/or multilayer can be based on non-toxic/food-safe, biodegradable and/or compostable materials. The packaging, layered structure and/or multilayer can enable full recyclability of all paper base materials, by usage of water-soluble polymers and additives, while simultaneously providing excellent barrier function against water vapor transmission, oxygen transmission, oil and/or grease.

Furthermore, all necessary requirements to processing relevant material-properties, as well as application-specific material-properties for the undisruptive employment of such packaging, layered structure and/or multilayer in existing production environments are met.

The water-soluble polymer can comprise a polymer that has a plurality of vinyl alcohol [CH2CH(OH)] groups in the polymer chain, in particular wherein the water-soluble polymer is poly(vinyl alcohol) (PVOH).

The water-soluble polymer can be at least one of:
- polyvinyl alcohol) (PVOH),
- cellulose-ether polymer,
- Butenediol-Vinylalcohol-Copolymer (BVOH), and
- Ethyl ene-Vinylalcohol-Copolymers (EVOH).

The water-soluble polymer can comprise at least one vinyl-alcohol copolymer and/or a mixture and/or blend of two or more vinyl-alcohol copolymers. The copolymers can differ in molar mass, molecular architecture, e. g. branching, comonomer type and amount, to name only a few variation parameters.

The water-soluble polymer can comprise further polar comonomers. Examples include maleic acid and maleic acid anhydride, fumaric acid and itaconic acid.

The PVOH can be a vinyl alcohol rich copolymer and/or vinyl alcohol homopolymer. The water-soluble polymer, in particular the polyvinyl alcohol (PVOH), can have a degree of hydrolysis of 70% to 99,9%. The degree of saponification can control the performance to the oxygen transmission barrier. A higher saponification may for instance improve the oxygen transmission barrier performance. A vinyl-alcohol containing polymer can comprise >75%, in particular >90%, monomer units carrying an OH unit.

The first layer and/or third layer can comprise at least one of the following polymers:
- Poly(vinyl alcohol) obtained e.g. by the saponification of Poly(vinyl ester) homopolymers or copolymers,
- Ethylene-Vinylalcohol-Copolymers (EVOH),
- Butenediol-Vinylalcohol-Copolymer (BVOH), to name only a few.

In embodiment, the packaging, layered structure and/or multilayer is non-toxic to human, in particular the packaging, layered structure and/or multilayer is recognized as being safe in food industry, also called food-safe.

Further preferred embodiments are evident from the dependent patent claims. Features of the method claims may be combined with features of the device claims and vice versa.

While the invention has been described in present preferred embodiments of the invention, it is distinctly understood that the invention is not limited thereto, but may be otherwise variously embodied and practised within the scope of the claims.

A polymer composition 55 comprising a water-soluble polymer and Polycaprolactone (PCL) 16 is inter- and/or intramolecular crosslinked by a natural and/or food-safe compound. The natural and/or food-safe compound can be citric acid. The polymer composition 55 is a food contact material and can be bio-degradable and compostable.

The water-soluble polymer 18 comprises Poly(vinyl alcohol) (PVOH).

The crosslinked polymer composition 55 can be water-soluble and can act an oxygen barrier. The oxygen barrier can be characterized in terms of the oxygen transmission rat a material provides.

A multilayer 5 comprise a first layer 1 with an oxygen transmission barrier, and a second layer 2 with a water vapor and/or humidity barrier. The first layer 1 comprises a water-soluble polymer and the second layer 2 comprises a wax 20. The wax 20 can be at least one of a natural wax 20, food-safe wax 20, bio-degradable wax 20, beeswax 20.

The first layer 1 comprises the polymer composition 55 with the crosslinked polymer composition 55 comprising poly vinyl alcohol (PVOH) and polycaprolactone (PCL).

The second layer 2 with the wax 20 additionally comprises an emulsifier 21, in order to provide a compatibility between the hydrophilic first layer 1 and the wax of the second layer 2. The emulsifier 21 can be mono- and diglyceride of fatty acids, also known as E471.

The second layer 2 is coated onto the hydrophilic surface of the first layer 1 by precipitating the wax 20 from a heated, alcoholic solution loaded with emulsifier 21. The second layer 2 builds a wax-based film without islanding or defects in the film, thus providing excellent water vapor and/or humidity barrier.

The multilayer has a water vapor and/or humidity barrier of a maximum of 15 g/m2 per day at 25°C and a relative humidity of 80%, in particular a maximum of 10 g/m2 per day at 25°C and a relative humidity of 80%, in particular 3 g/m2 per day at 25°C and a relative humidity of 80%, in particular 2 g/m² per day at 25°C and a relative humidity of 80%. The excellent water vapor and/or humidity barrier are in particular provided by the wax included in the second layer. This makes the multilayer suitable for packaging barrier-sensitive goods, such as coffee.

The second layer 2 can comprise a water-soluble polymer as e.g. poly vinyl alcohol (PVOH).

The multilayer 5, in particular the first layer 1, in particular the polymer composition 55, has an oxygen transmission rate of a maximum of 3 cm³/m² per day at room temperature (RT, room temperature = 23°C) and a relative humidity of 50% (rel. H), in particular the oxygen transmission rate can be maximal 1 cm³/m² per day at room temperature and a relative humidity of 50%, in particular maximal 0.2 cm³/m² per day at room temperature (23°C) and a relative humidity of 50%.

In some examples according to the invention, the multilayer 5 further comprises a third layer 3. The third layer 3 comprises similar to the first layer 1 a water-soluble polymer to be poly vinyl alcohol (PVOH). The third layer 3 is applied adjacent to the second layer 2. The second layer 2 is arranged between the first layer 1 and the third layer 3. The third layer 3 acts as a aroma-barrier for the wax-based second layer 2. The third layer 3 can also act as a sealing promoter.

The layers of the multilayer 5 can be separable from each other. This allows for an individual recycling of the layers of the multilayer 5. The layers of the multilayer 5 can be separated from each other under the conditions of the recycling process. In particular the layers are separable at a maximum temperature of 40 °C, in particular of 38°C to the most, in particular of 35°C to the most, in particular of 30°C to the most, in an aqueous environment.

In an example the first layer 1 comprises a first sublayer 11 and a second sublayer 12. The second sublayer 12 can be arranged adjacent to the second layer 2.

The second sublayer 12 can comprise the polymer composition 55 with the crosslinked mixture of PVOH and Polycaprolactone (PCL) 16. The second sublayer 12 acts as a gas barrier, in particular in relation to oxygen.

In an example, the multilayer 5 is applied to a paper base layer 51 to build a layered structure 50.

The paper base layer 51 can be paper, fibre substrate or paperboard. Paper may especially be a non-woven material, pulp-based material. A pulp-based material is a material made from pulp, i.e., from fibers suspended in a liquid (especially water), which is removed at least partially for the production. The fibers may include vegetable fibers (especially fibers of cellulose (wood-based or from fiber crops)), especially at least 50% or at least 80% vegetable fibers or 100% vegetable fibers. In addition or as an alternative, the fibers may include mineral fibers or other natural fibers, or man-made fibers, for example on a calcium carbonate basis.

The multilayer 5 and/or the layered structure 50 is used for packing food, in particular for packing coffee. The corresponding packaging comprises the multilayer 5 and/or the layered structure 50 with the paper base layer 51.

The layered structure 50 can be represented as in the following examples:

### Example 1

| component | weight composition |
|---|---|
| paper base layer 51 | > 50% in wt of the total layered structure 50 |
| first sublayer 11 of the first layer 1 comprising PVOH | 15-25% in wt of the multilayer 5 |
| second sublayer 12 of the first layer first layer 1 comprising the polymer composition 55 with crosslinked PVOH a PCL | 45-60 % in wt of the multilayer 5 |
| second layer 2 | <1,6% in wt of the multilayer 5 |
| third layer 3 | 25-35 % in wt of the multilayer 5 |

### Example 2

| component | weight composition |
|---|---|
| paper base layer 51 | > 50% in wt of the total layered structure 50 |
| first sublayer 11 of the first layer 1 | 15-25% in wt of the multilayer 5 |
| second sublayer 12 of the first layer first layer 1 comprising the polymer composition 55 with crosslinked PVOH a PCL | 25-35 % in wt of the multilayer 5 |
| additional layer comprising a polyester derived from caprolactone monomere | 15-25% in wt of the multilayer 5 |
| second layer 2 | <1,6% in wt of the multilayer 5 |
| third layer 3 comprising PVOH | 25-35 % in wt of the multilayer 5 |

In a further example 3, the first sublayer 11 of the first layer 1 comprises 75 wt% of PVOH and 22 wt% of PEG (Polyethylene glycol) and 3 wt % Calcium carbonate and 1 wt% additive (as eg. Silica). The second sublayer 12 of the first layer 1 comprises 64 wt% of PVOH and 8 wt% of Glycerol and 4 wt % Calcium carbonate and 12 wt% additive (eg. cellulose) and 11% additive (e.g. Bentonite). The second layer 2 comprises 50 wt% beeswax and 46 % isopropyl alcohol and 4 % additive (e.g. E471, being a mono-or diglyceride fatty acid). The third layer 3 is comprises PVOH.

The multilayer 5, the layered structure 50 and/or the packaging comprising the layered structure 50 can be at least one of bio-degradable and compostable, in particular home compostable.

## Claims

1. Multilayer (5) comprising:
- at least one first layer (1) comprising water-soluble polymer
wherein the first layer (1) has an oxygen transmission barrier,
- at least one second layer (2),
wherein second layer (2) has a water vapor and/or humidity barrier;
wherein the second layer (2) comprises a wax (20), in particular a natural wax, in particular food-safe wax, in particular bio-degradable wax, in particular bee wax.

2. The multilayer (5) according to any of the previous claims, wherein the first layer 1 comprises a crosslinked polymer composition comprising poly vinyl alcohol (PVOH) and polycaprolactone (PCL).

3. The multilayer (5) according to any of the previous claims, wherein the multilayer (5) has a water vapor and/or humidity barrier of a maximum of 15 g/m² per day at 25°C and a relative humidity of 80%, in particular a maximum of 10 g/m² per day at 25°C and a relative humidity of 80%, in particular 3 g/m² per day at 25°C and a relative humidity of 80%, in particular 2 g/m2 per day at 25°C and a relative humidity of 80%.

4. The multilayer (5) according to any of the previous claims, wherein the second layer (2) comprises an emulsifier (21).

5. The multilayer (5) according to any of the previous claims, wherein the layers of the multilayer are separable from each other.

6. The multilayer (5) according to any of the previous claims, wherein the multilayer (5) is at least one of bio-degradable and compostable, in particular home compostable.

7. The multilayer (5) according to any of the previous claims, wherein the multilayer (5) comprises a third layer (3), wherein the third layer (3) is arranged adjacent to the second layer (2).

8. The multilayer (5) according to any of the previous claims, wherein the second layer, in particular the wax, and the third layer are merged into one unique layer.

9. Layered structure (50) comprising:
- a paper base layer (51) and
- a multilayer (5) according to any one of the previous claims.

10. Method for producing a layered structure (50), in particular a layered structure (50) according to any one of claims 9, comprising the steps of:
- providing a paper base layer (51);
- applying a multilayer (5) on the paper base layer (51).

11. Method for producing a multilayer (5) according to one of the previous claims 1-8,
wherein the first layer (1) is hydrophilic, and
wherein the second layer (2) is coated onto the hydrophilic surface of the first layer (1) by precipitating the wax (20) from a heated, alcoholic solution loaded with emulsifier (21).

12. Use of at least one of a multilayer (5) and a layered structure (50) according to any of the previous claims for packing, in particular for food packing, in particular for packing coffee.

13. Packaging comprising a multilayer (5) according to one of claims 1 to 8 and/or the layered structure (50) claim 9.
